# EUROPEAN PATENT APPLICATION

(11) **EP 4 583 206 A1**
(43) Date of publication of application: **09.07.2025**
(21) Application number: 23881163.2
(22) Date of filing: 05.05.2023
(51) Int. Cl.: H01M 4/505, H01M 10/0525

(54) **MANGANESE-BASED SOLID SOLUTION POSITIVE ELECTRODE MATERIAL, PREPARATION METHOD THEREFOR AND USE THEREOF**

(30) Priority: 25.10.2022 CN 202211313536
(71) Applicant: Eve Power Co., Ltd., Jingmen, Hubei 448000 (CN)
(72) Inventor: HU, Qi, Jingmen, Hubei 448000 (CN); ZENG, Hanmin, Jingmen, Hubei 448000 (CN); LI, Si, Jingmen, Hubei 448000 (CN); ZHOU, Cong, Jingmen, Hubei 448000 (CN); XU, Yuebin, Jingmen, Hubei 448000 (CN); HE, Wei, Jingmen, Hubei 448000 (CN)
(74) Representative: Herrero & Asociados, S.L.
(86) International application number: PCT/CN2023/092144
(87) International publication number: WO 2024/087568

(57) **Abstract**

A manganese-based solid solution positive-electrode material, wherein the manganese-based solid solution positive-electrode material has a layered structure, and a chemical formula of the manganese-based solid solution positive-electrode material is aNa₂MnₓRi₁₋ₓO₃-(1-a)LiMn_{γ}M_{1-γ}O₂, where 0.05 ≤ a < 1, 0 < x ≤ 1, 0.1 ≤ y ≤ 1, and each of the R and the M in the chemical formula independently comprises any one or combination of at least two of: alkali metal elements, alkaline earth metal elements, and transition metal elements.

## Description

### TECHNICAL FIELD

Embodiments of the present disclosure relate to the technical field of lithium-ion batteries, and more specifically, to a manganese-based solid solution positive-electrode material and a method of preparing the material and application of the material.

### BACKGROUND

Manganese-based materials, such as LiMnO₂, have a theoretical capacity of 285 mAh/g, and therefore, the manganese-based materials may have significant potential in utilizing the capacity. In addition, the manganese-based materials have low costs, raw materials for the manganese-based materials are abundant, and safety performance of the manganese-based materials is excellent. However, performance of the manganese-based materials at high temperatures is poor, a suitable solution needs to be applied to stabilize a structure of the performance of the manganese-based materials to prevent spinel formation.

Currently, a pure phase of the manganese-based material LiMnO₂ may not be synthesized easily, a majority of the synthesized material has a spinel structure, utilization of a capacity pergram of the synthesized material is low, and high-temperature cycling performance of the synthesized material is poor. Common methods to stabilize the structure include doping elements and coating, where single elements occupy Li/Mn/O sites. However, during long-term charging-discharging cycles, doped elements may be unstable. Therefore, the above methods do not overcome the technical problem that a layered structure of the LiMnO₂ itself is unstable, and the high-temperature performance thereof remains unsatisfied. In addition, during cycling, LiMnO₂ tends to form the spinel structures, resulting in loss of activity, and therefore, the capacity cannot be restored.

Current methods for modifying the manganese-based materials include the following. (1) In the Chinese patent publication No. CN102800840A, a spheroid lithium manganate and a preparation method of the spheroid lithium manganate are disclosed. A specific surface area of the material is reduced, and therefore, manganese dissolution is reduced, improving cycling performance of a battery. However, in the method, only morphology of the material is adjusted, and direct contact between the lithium manganate and an electrolyte is not prevented. (2) Oxides, phosphates, fluorides, and other inorganic materials may coat on a surface of the lithium manganate. Direct contact between the positive-electrode material and the electrolyte is prevented by coating an inert material, such that manganese dissolution is reduced, and the cycling performance of the battery is improved. For example, in the Chinese patent publication No. CN104134793A, a method for preparing a lithium manganate positive-electrode material for a lithium-ion battery is disclosed, in which ordinary lithium manganate is coated with doped modified lithium manganate. In this way, cycling performance of the battery is improved. However, crystal defects may be introduced into the doped modified lithium manganate during production, leading to poor product consistency, and by applying the modification method, effectiveness in reducing side reactions on a surface of the lithium manganate is limited. In the Chinese patent publication No. CN102054985A, a lithium manganate and a preparation method of the lithium manganate are disclosed. Compatibility of the material and the electrolyte is improved by coating with elements such as Li, Cr, Co, Ni, Mg, Ga, Sr, Ba, Na, K, Al, Be, B, Ti, Zr, Cu, Zn, Ga, Sn, V, or F, Cl, Br, I, S, such that high-temperature and room-temperature cycling performance of the battery is improved, and high-temperature storage performance of the battery is improved. According to this method, a high-crystallinity precursor is coated with a low-crystallinity compound. Since the precursor and the compound have different crystal structures, new grain boundaries may be formed between the coating and core materials. When an electrode sheet is being rolled, an internal stress of the lithium manganate material may be large to cause cracking, leading to poor cycling performance of the battery.

Therefore, effectively preventing spinel formation of the manganese-based positive-electrode materials, improving a capacity of the material, and improving cycling performance are technical problems that need to be solved.

### SUMMARY

The following is a summary of detailed description of the present disclosure and does not limit the scope of claims.

Embodiments of the present disclosure provide a manganese-based solid solution positive-electrode material, a preparation method of the manganese-based solid solution positive-electrode material, and application of the manganese-based solid solution positive-electrode material. In the present disclosure, a manganese-based solid solution material having a layered structure is provided. A sodium-manganese-based material is introduced, and the sodium-manganese-based material and a manganese-based substrate material cooperatively form a solid solution. In this way, spinel phases are prevented from being formed in the manganese-based material, such that stability of the layered structure is improved, cycling stability of the positive-electrode material is improved. In addition, the sodium-manganese-based material has high conductivity, conductivity of the positive-electrode material is improved, and a capacity of the positive-electrode material is improved.

In a first aspect, the embodiments of the present disclosure provide a manganese-based solid solution positive-electrode material having a layered structure. A chemical formula of the manganese-based solid solution positive-electrode material is aNa₂MnₓR₁₋ₓO₃·(1-a)LiMn_{γ}M_{1-γ}O₂, where 0.05 ≤ a < 1, 0 < x ≤ 1, 0.1 ≤ y ≤ 1. Each of the R and the M in the chemical formula independently includes any one or combination of at least two of: alkali metal elements, alkaline earth metal elements, and transition metal elements.

For example, the a may be 0.05, 0.1, 0.2, 0.3, 0.4, 0.5, 0.6, 0.7, 0.8, 0.9, or 0.99; the x may be 0.05, 0.1, 0.13, 0.15, 0.18, 0.2, 0.23, 0.25, 0.28, 0.3, 0.33, 0.35, 0.4, 0.5, 0.6, 0.7, 0.8, 0.9, or 1; the y may be 0.1, 0.13, 0.15, 0.18, 0.2, 0.23, 0.25, 0.28, 0.3, 0.33, 0.35, 0.4, 0.5, 0.6, 0.7, 0.8, 0.9, or 1.

The embodiments of the present disclosure provide the manganese-based solid solution positive-electrode material having the layered structure. The sodium-manganese-based material is introduced, and the sodium-manganese-based material and the manganese-based substrate material cooperatively form the solid solution. In this way, spinel phases are prevented from being formed in the manganese-based material, such that stability of the layered structure is improved, cycling stability of the positive-electrode material is improved. In addition, the sodium-manganese-based material has high conductivity, conductivity of the positive-electrode material is improved, and a capacity of the positive-electrode material is improved.

In the present disclosure, the sodium-manganese-based material is not simply applied by doping or coating but forms the solid solution structure with the manganese-based substrate material. On the one hand, a valence state of Mn is stabilized, and the Jahn-Teller effect of Mn is reduced. On the other hand, the structure of Mn is maintained, Li and Mn site mixing is reduced, ensuring stability of Mn sites. In this way, structural stability of the positive-electrode material is improved, spinel phases are prevented from being formed, cycling stability of the positive-electrode material is improved. In addition, the sodium-manganese-based material has high conductivity, conductivity of the positive-electrode material is improved, and a capacity pergram of the positive-electrode material can be fully utilized. Furthermore, the positive-electrode material has low costs and can be large-scaled produced.

In an embodiment, in the chemical formula, 0.05 ≤ a ≤ 0.35, such as, 0.05, 0.08, 0.1, 0.13, 0.15, 0.18, 0.2, 0.23, 0.25, 0.28, 0.3, 0.33, or 0.35, and so on.

In the chemical formula of the manganese-based solid solution positive-electrode material of the present disclosure, when a value of the a is excessively large (>0.35), on the one hand, an amount of LiMn_{γ}M_{1-γ}O₂ may be reduced, leading to a decrease in the capacity; and on the other hand, an excessively high value of the a may cause a Na₂MnₓR₁₋ₓO₃ phase to be introduced into a bulk phase, such that an impedance is increased, and kinetics of the overall material is reduced, rate performance and the capacity of the material may be reduced.

In an embodiment, the R in the chemical formula includes any one or combination of at least two of: Co, Fe, Zn, Cu, Na, K, Zr, Mg, Nb, W, Y, Sr, Ca, and Al.

In an embodiment, the M in the chemical formula includes any one or combination of at least two of: Ni, Co, Fe, Zn, Cu, Na, K, Zr, Mg, Nb, W, Y, Sr, Ca, and Al.

In a second aspect, the present disclosure provides a preparation method for the manganese-based solid solution positive-electrode material described in the first aspect. The preparation method includes following operations.

A sodium-manganese-based oxide material and a single-sintered manganese-based material are mixed with each other and are sintered in an oxygen-containing atmosphere, so as to obtain the manganese-based solid solution positive-electrode material.

A chemical formula of the sodium-manganese-based oxide material is Na₂MnₓR₁₋ₓO₃, where 0 < x ≤ 1. A chemical formula of the single-sintered manganese-based material is LiMn_{γ}M_{1-γ}O₂, where 0.1 ≤ y ≤ 1. Each of the R in the chemical formula of the sodium-manganese-based oxide material and the M in the chemical formula of the single-sintered manganese-based material independently includes alkaline earth metal elements and/or transition metal elements. For example, the x may be 0.05, 0.1, 0.13, 0.15, 0.18, 0.2, 0.23, 0.25, 0.28, 0.3, 0.33, 0.35, 0.4, 0.5, 0.6, 0.7, 0.8, 0.9, or 1; the y may be 0.1, 0.13, 0.15, 0.18, 0.2, 0.23, 0.25, 0.28, 0.3, 0.33, 0.35, 0.4, 0.5, 0.6, 0.7, 0.8, 0.9, or 1.

In the present disclosure, the sodium-manganese-based oxide material and the single-sintered manganese-based material are sintered and fused to each other to form the solid solution, rather than simple coating. The solid solution facilitates maintaining stability of the layered structure of the manganese-based positive-electrode material during cycling, preventing spinel formation, such that overall cycling performance is improved. In addition, the sodium-manganese-based oxide material improves the conductivity of the manganese-based positive-electrode material, the capacity of the positive-electrode material can be utilized effectively. The preparation method is simple and low-cost, and the material can be large-scaled produced.

In an embodiment, a sintering temperature is 400-1000°C, such as, 400°C, 500°C, 600°C, 700°C, 800°C, 810°C, 820°C, 830°C, 840°C, 850°C, 860°C, 870°C, 880°C, 890°C, 900°C, 910°C, 920°C, 930°C, 940°C, or 950°C, preferably 800-950°C.

In the present disclosure, sintering in a range of 800-950°C allows two phases to be fused with each other better, ensuring an ordered arrangement of the two phases at an atomic level, such that a pure composite phase is formed. When the sintering temperature is excessively low (<800°C), fusion of the two phases may not be facilitated, or only partial fusion occurs, and a phase purity is reduced. When the sintering temperature is excessively high (>950°C), the valence state of Mn may be varied, a layered structure phase may not be formed, and the spinel phase may be formed instead.

In an embodiment, D50 of the sodium-manganese-based oxide material is 100 nm-5 µm, such as, 100 nm, 300 nm, 500 nm, 800 nm, 1 µm, 1.3 µm, 1.5 µm, 1.8 µm, 2 µm, 2.5 µm, 3 µm, 3.5 µm, 4 µm, 4.5 µm, or 5 µm, and so on.

In an embodiment, a specific surface area of the sodium-manganese-based oxide material is 10-40 m²/g, such as, 10 m²/g, 13 m²/g, 15 m²/g, 18 m²/g, 20 m²/g, 23 m²/g, 25 m²/g, 28 m²/g, 30 m²/g, 33 m²/g, 35 m²/g, 38 m²/g, or 40 m²/g, and so on.

In the present disclosure, the D50 and the specific surface area of the sodium-manganese-based oxide material indicate that the sodium-manganese-based oxide material has a loose structure. The loose structure ensures that the single-sintered manganese-based material and the sodium-manganese-based oxide material can be optimally fused with each other during sintering, facilitating formation of the composite phase at the atomic level.

In an embodiment, a preparation method for the sodium-manganese-based oxide material includes the following.

A sodium source and a manganese source are mixed and are pyrolyzed in a spray in an oxygen-containing atmosphere to obtain the sodium-manganese-based oxide material.

In the present disclosure, the sodium-manganese-based oxide material, which is prepared by spray pyrolysis, has small primary particle sizes, such that the sodium-manganese-based oxide material has an optimal activity for subsequent sintering. In addition, a substance having secondary particles of a loose structure may be obtained easily, particle sizes of the substance may be within a suitable range. In this way, activity of the secondary particles is ensured. Since the secondary particles have the loose structure and the primary particles have small sizes, and the activity is high, fusion of the two phases at lower sintering temperatures may be achieved easily to form the solid solution-type composite phase.

In an embodiment, mixed raw materials further include an R source.

Preferably, a molar concentration of the sodium source is 0.1-2 mol/L, such as, 0.1 mol/L, 0.3 mol/L, 0.5 mol/L, 0.8 mol/L, 1 mol/L, 1.3 mol/L, 1.5 mol/L, 1.8 mol/L, or 2 mol/L, and so on.

Preferably, the sodium source includes any one or combination of at least two of: sodium citrate, sodium oxalate, sodium acetate, sodium carbonate, sodium hydroxide, and sodium oxide.

Preferably, a molar concentration of the manganese source is 0.1-2 mol/L, such as, 0.1 mol/L, 0.3 mol/L, 0.5 mol/L, 0.8 mol/L, 1 mol/L, 1.3 mol/L, 1.5 mol/L, 1.8 mol/L, or 2 mol/L, and so on.

Preferably, the manganese source includes any one or combination of at least two of: manganese carbonate, manganese acetate, manganese oxalate, and manganese oxide.

Preferably, a spray pyrolysis temperature is 400-1000°C, such as, 400°C, 450°C, 500°C, 550°C, 600°C, 650°C, 700°C, 750°C, 800°C, 850°C, 900°C, 950°C, or 1000°C, and so on.

In an embodiment, the D50 of the single-sintered manganese-based material is 1-3 µm, such as, 1 µm, 1.3 µm, 1.5 µm, 1.8 µm, 2 µm, 2.3 µm, 2.5 µm, 2.8 µm, or 3 µm, and so on.

In the present disclosure, the D50 of the single-sintered manganese-based material matches the D50 of the sodium-manganese-based oxide material. Synergistically, it is ensured that two sized materials both have optimal activity, facilitating the fusion of the two phases at lower sintering temperatures, and facilitating a purer material to be synthesized, avoiding formation of impurity phases.

In an embodiment, a preparation method for the single-sintered manganese-based material includes the following.

The manganese source and a lithium source are mixed and are sintered for a single time in an oxygen-containing atmosphere to obtain the single-sintered manganese-based material.

In an embodiment, the mixed raw materials further include an M source.

Preferably, a single sintering temperature is 400-1000°C, such as, 400°C, 450°C, 500°C, 550°C, 600°C, 650°C, 700°C, 750°C, 800°C, 850°C, 900°C, 950°C, or 1000°C, and so on.

In a preferred embodiment, the preparation method includes the following.
(1) The sodium source having the molar concentration of 0.1-2 mol/L and the manganese source having the molar concentration of 0.1-2 mol/L are mixed to each other. The mixed raw materials further include the R source, and spray pyrolysis in the oxygen-containing atmosphere at 400-1000°C is performed on the mixed raw materials to obtain the sodium-manganese-based oxide material having the D50 of 100 nm-5 µm and the specific surface area of 10-40 m²/g.
   The manganese source and the lithium source are mixed to each other. The mixed raw materials further include a nickel source and the M source, and the single sintering in the oxygen-containing atmosphere at 400-1000°C is performed on the mixed raw materials to obtain the single-sintered manganese-based material having the D50 of 1-3 µm.
(2) The sodium-manganese-based oxide material and the single-sintered manganese-based material are mixed and are sintered in the oxygen-containing atmosphere at 800-950°C to obtain the manganese-based solid solution positive-electrode material.

The chemical formula of the sodium-manganese-based oxide material is Na₂MnₓR₁₋ₓO₃, where 0 < x ≤ 1, and the chemical formula of the single-sintered manganese-based material is LiMn_{γ}M_{1-γ}O₂, where 0.1 ≤ y ≤ 1. Each of the R in the chemical formula of the sodium-manganese-based oxide material and the M in the chemical formula of the single-sintered manganese-based material independently includes any one or any combination of at least two of: alkali metal elements, alkaline earth metal elements, and transition metal elements.

In a third aspect, the embodiments of the present disclosure further provide a lithium-ion battery, which includes the manganese-based solid solution positive-electrode material described in the first aspect.

Compared to the related art, the embodiments of the present disclosure have following technical effects:
(1) The embodiments of the present disclosure provide the manganese-based solid solution material having the layered structure. The sodium-manganese-based material is introduced, and the sodium-manganese-based material and the manganese-based substrate material cooperatively form the solid solution. On the one hand, the valence state of Mn is stabilized, and the Jahn-Teller effect of Mn is reduced. On the other hand, the structure of Mn is maintained, Li and Mn site mixing is reduced, ensuring stability of Mn sites. In this way, structural stability of the positive-electrode material is improved, the positive-electrode material having a clear layered structure is obtained, preventing formation of the spinel phase, such that cycling stability, especially high-temperature cycling performance, is improved. In addition, the sodium-manganese-based material has high conductivity, further improving the conductivity of the positive-electrode material, and the capacity pergram of the positive-electrode material can be effectively utilized. A button battery is arranged with the manganese-based solid solution positive-electrode material of the present disclosure, the a in the chemical formula is limited to 0.05 ≤ a ≤ 0.35, and the temperatures and the D50 of the materials during preparation are controlled. A capacity pergrapm of the button battery may be higher than 170 mAh/g at 0.1C charging-discharging current, in the voltage range of 2.5-4.5V, and at the room temperature. The capacity pergrapm of the button battery may be higher than 163 mAh/g at 0.1C charging-discharging current, in the voltage range of 2.5-4.4V, and at the room temperature. The capacity pergrapm of the button battery may be higher than 140 mAh/g at 0.1C charging-discharging current, in the voltage range of 2.5-4.35V, and at the room temperature. The capacity pergrapm of the button battery may be higher than 130 mAh/g at 0.1C charging-discharging current, in the voltage range of 2.5-4.2V, and at the room temperature. When the button battery is tested under a condition of a high temperature of 45°C, a 0.1C/0.1C current, and 2.5-4.35V, a capacity retention rate of the button battery after 100 cycles is over 93%.
(2) The preparation method provided by the embodiments of the present disclosure is simple, feasible, and low-cost, and therefore, large-scale production may be performed.

After reading and understanding the detailed description, other aspects of the present disclosure may be understood.

### DETAILED DESCRIPTIONS

### Embodiment 1

The present embodiment provides a manganese-based solid solution positive-electrode material having a layered structure. A chemical formula of the manganese-based solid solution positive-electrode material is 0.35Na₂MnO₃·0.65LiMnO₂.

A preparation method for the manganese-based solid solution positive-electrode material is as follows.
(1) Na₂MnO₃ and LiMnO₂ are prepared separately.

For preparing Na₂MnO₃, sodium acetate and manganese carbonate in a molar ratio of the chemical formula are mixed and are spray-pyrolyzed in an oxygen-containing atmosphere at 650°C to obtain Na₂MnO₃ having a D50 of 5 µm and a specific surface area of 10 m²/g.

For preparing LiMnO₂, manganese oxide and lithium carbonate are mixed with each other in a lithium:manganese molar ratio of 1.05:1 and are sintered in an oxygen-containing atmosphere at 700°C to obtain LiMnO₂ having a D50 of 3 µm.

(2) Na₂MnO₃ and LiMnO₂ in a molar ratio of 0.35:0.65 are mixed and sintered in an oxygen-containing atmosphere at 800°C to obtain the manganese-based positive-electrode material.

### Embodiment 2

The present embodiment provides a manganese-based solid solution positive-electrode material having a layered structure. A chemical formula of the manganese-based solid solution positive-electrode material is 0.1Na₂MnO₃·0.9LiMnO₂.

A preparation method for the manganese-based solid solution positive-electrode material is as follows.
(1) Na₂MnO₃ and LiMnO₂ are prepared separately.

For preparing Na₂MnO₃, sodium acetate and manganese carbonate in a molar ratio of the chemical formula are mixed and are spray-pyrolyzed in an oxygen-containing atmosphere at 400°C to obtain Na₂MnO₃ having a D50 of 4 µm and a specific surface area of 25 m²/g.

For preparing LiMnO₂, manganese carbonate and lithium carbonate are mixed with each other in a lithium:manganese molar ratio of 1.03:1 and are sintered in an oxygen-containing atmosphere at 900°C to obtain LiMnO₂ having a D50 of 2 µm.

(2) Na₂MnO₃ and LiMnO₂ in a molar ratio of 0.1:0.9 are mixed and sintered in an oxygen-containing atmosphere at 870°C to obtain the manganese-based positive-electrode material.

### Embodiment 3

The present embodiment provides a manganese-based solid solution positive-electrode material having a layered structure. A chemical formula of the manganese-based solid solution positive-electrode material is 0.25Na₂Mn_{0.6}Zr_{0.4}O₃·0.75LiMnO₂.

A preparation method for the manganese-based solid solution positive-electrode material is as follows.
(1) Na₂Mn_{0.6}Zr_{0.4}O₃ and LiMnO₂ are prepared separately.

For preparing Na₂Mn_{0.6}Zr_{0.4}O₃, sodium acetate, manganese carbonate, and zirconium acetate in a molar ratio of the chemical formula are mixed and are spray-pyrolyzed in an oxygen-containing atmosphere at 800°C to obtain Na₂MnO₃ having a D50 of 1.5 µm and a specific surface area of 30 m²/g.

For preparing LiMnO₂, manganese oxide and lithium carbonate are mixed with each other in a lithium:manganese molar ratio of 1.01:1 and are sintered in an oxygen-containing atmosphere at 700°C to obtain LiMnO₂ having a D50 of 1 µm.

(2) Na₂Mn_{0.6}Zr_{0.4}O₃ and LiMnO₂ in a molar ratio of 0.25:0.75 are mixed and sintered in an oxygen-containing atmosphere at 950°C to obtain the manganese-based positive-electrode material.

### Embodiment 4

Being different from the embodiment 1, a chemical formula of the solid solution in the present embodiment is 0.4Na₂MnO₃·0.6LiMnO₂, and molar ratios in a preparation method therefor may be adjusted accordingly.

The remaining operations and parameters in the preparation method are the same as those in the embodiment 1.

### Embodiment 5

Being different from the embodiment 1, a chemical formula of the solid solution in the present embodiment is 0.9Na₂MnO₃·0.1LiMnO₂, and molar ratios in a preparation method therefor may be adjusted accordingly.

The remaining operations and parameters in the preparation method are the same as those in the embodiment 1.

### Embodiment 6

Being different from the embodiment 1, the temperature of the sintering in the operation (2) of the present embodiment is 750°C.

The remaining operations and parameters in the preparation method are the same as those in the embodiment 1.

### Embodiment 7

Being different from the embodiment 1, the temperature of the sintering in the operation (2) of the present embodiment is 1000°C.

The remaining operations and parameters in the preparation method are the same as those in the embodiment 1.

### Embodiment 8

Being different from the embodiment 1, the D50 of LiMnO₂ in the operation (1) of the present embodiment is 4 µm.

The remaining operations and parameters in the preparation method are the same as those in the embodiment 1.

### Embodiment 9

The present embodiment provides a manganese-based solid solution positive-electrode material having a layered structure. A chemical formula of the manganese-based solid solution positive-electrode material is 0.1Na₂MnO₃·0.9LiMn_{0.5}Ni_{0.5}O₂.

A preparation method for the manganese-based solid solution positive-electrode material is as follows.
(1) Na₂MnO₃ and LiMn_{0.5}Ni_{0.5}O₂ are prepared separately.

For preparing Na₂MnO₃, sodium acetate and manganese carbonate are spray-pyrolyzed in an oxygen-containing atmosphere at 650°C to obtain Na₂MnO₃ having a D50 of 5 µm and a specific surface area of 10 m²/g.

For preparing LiMn_{0.5}Ni_{0.5}O₂, manganese oxide, nickel hydroxide, and lithium carbonate are mixed with each other in a lithium:manganese:nickel molar ratio of 1.05:0.5:0.5 and are sintered in an oxygen-containing atmosphere at 700°C to obtain LiMn_{0.5}Ni_{0.5}O₂ having a D50 of 2.5 µm.

(2) Na₂MnO₃ and LiMn_{0.5}Ni_{0.5}O₂ in a molar ratio of 0.1:0.9 are mixed and sintered in an oxygen-containing atmosphere at 800°C to obtain the manganese-based positive-electrode material.

### Control embodiment 1

Being different from the embodiment 1, a pure LiMnO₂ positive-electrode material is provided in the present control embodiment, and only the operation (1) for preparing LiMnO₂ in the embodiment 1 is performed.

The remaining operations and parameters of the preparation method are the same as those in the embodiment 1.

### Control embodiment 2

The present control embodiment provides a manganese-based positive-electrode material having a LiMnO₂ core coated by aluminum oxide. A preparation method for the positive-electrode material is as follows.

For preparing LiMnO₂, manganese oxide and lithium carbonate in a lithium:manganese molar ratio of 1.05:1 are mixed and are sintered in an oxygen-containing atmosphere at 700°C to obtain LiMnO₂ having a D50 of 3 µm.

Subsequently, aluminum oxide of 500 nm is mixed with and coats LiMnO₂ to prepare the aluminum-oxide-coated LiMnO₂ material having the D50 of 3 µm.

### Control embodiment 3

Being different from the embodiment 9, a pure LiMn_{0.5}Ni_{0.5}O₂ positive-electrode material is provided in the present control embodiment, and only the operation (1) for preparing LiMn_{0.5}Ni_{0.5}O₂ in the embodiment 9 is performed.

The remaining operations and parameters of the preparation method are the same as those in the embodiment 9.

The positive-electrode material provided in each of the embodiments 1-9 and control embodiments 1-3 is mixed with conductive carbon black, polyvinylidene fluoride, and N-methylpyrrolidone to form a positive-electrode slurry. The positive-electrode slurry is coated on an aluminum foil. The aluminum foil coated with the positive-electrode slurry is dried and rolled to obtain a positive electrode. The positive electrode having a diameter of 12 mm is placed in a positive electrode shell having an inner diameter of 18 mm. 100 µL of electrolyte is injected into the positive electrode shell, and a 16 µm separator is arranged. A 14 µm lithium sheet is placed on the separator, and a spacer is arranged. Furthermore, a negative electrode shell is capped thereto, so as to form a button battery. Electrochemical performance tests are performed under following conditions:
(1) Capacity pergram tests are performed at a 0.1C charging-discharging current in voltage ranges of 2.5V-4.2V, 2.5V-4.35V, 2.5V-4.4V, and 2.5V-4.5V.
(2) Cycling performance tests are performed at 45°C, a voltage range of 2.5V-4.35V, and a 1C current for 100 cycles.

Test results are shown in Table 1.

**Table 1**

| | Capacity pergram 2.5~4.2V (mAh/g) | Capacity pergram 2.5-4.35V (mAh/g) | Capacity pergram 2.5V~4.4V (mAh/g) | Capacity pergram 2.5-4.5V (mAh/g) | capacity retention rate after 100 cycles at 45°C (%) |
|---|---|---|---|---|---|
| Embodiment 1 | 130 | 140 | 150 | 170 | 94 |
| Embodiment 2 | 150 | 160 | 170 | 180 | 93 |
| Embodiment 3 | 143 | 153 | 163 | 173 | 96 |
| Embodiment 4 | 110 | 120 | 130 | 140 | 95 |
| Embodiment 5 | 30 | 40 | 50 | 60 | 98 |
| Embodiment 6 | 120 | 130 | 140 | 150 | 90 |
| Embodiment 7 | 100 | 110 | 120 | 130 | 85 |
| Embodiment 8 | 120 | 130 | 140 | 150 | 70 |
| Embodiment 9 | 160 | 170 | 180 | 190 | 96 |
| Control embodiment 1 | 100 | 110 | 115 | 120 | 60 |
| Control embodiment 2 | 95 | 105 | 110 | 115 | 80 |
| Control embodiment 3 | 110 | 115 | 120 | 125 | 65 |

According to the results of the embodiment 1, the embodiment 4 and the embodiment 5, when a value of the a is excessively large (>0.35), i.e., a proportion of a sodium-manganese-based oxide material is excessively high, the capacity is less utilized, and the capacity at high voltages is also lower. However, the cycling performance is improved, proving that a sodium-manganese phase facilitates the cycling performance of the overall material to be improved.

According to the results of the embodiment 1, the embodiment 6 and the embodiment 7, when the temperature in the operation (2), in which mixing and fusion are performed to form the solid solution, is excessively low, fusion of two phases is affected, the solid solution may not be formed easily, leading to a significant decrease in the capacity pergram. At the same time, the cycling performance is not improved. When the temperature in the operation (2) is excessively high, the pure manganese-based material may be modified, such that the two phases may not be fused easily, the capacity is reduced, and the cycling performance is poor.

According to the results of the embodiment 1 and the embodiment 8, the D50 of the single-sintered manganese-based material and the D50 of the sodium-manganese-based oxide material need to match with each other. When the D50 of the single-sintered manganese-based material and the D50 of the sodium-manganese-based oxide material do not match with each other, fusion of the two phases is affected, purity of the resulting solid solution material is low, ultimately leading to a decrease in the capacity and leading to reduced cycling performance.

By comparing the results of the embodiment 1 and the control embodiment 1 and comparing the results of the embodiment 9 and the control embodiment 3, pure manganese-based positive-electrode materials have a low capacity pergram and poor cycling performance. However, after the sodium-manganese-based material is used to form the solid solution, the capacity pergram of the material is improved, and the cycling performance is improved. Therefore, the prepared material is a very promising material. By comparing the results of the embodiment 1 and the control embodiment 2, conventional treatment processes still cannot solve the problems of poor cycling performance at the room temperature and the low capacity pergram of the manganese-based material. However, by forming the solid solution with the sodium-manganese-based material, instead of simple coating or doping, a structure of a bulk phase of the manganese-based material is stabilized, such that the capacity pergram and the cycling performance of the manganese-based positive-electrode material are improved.

In summary, the present disclosure provides the manganese-based solid solution material having the layered structure. The sodium-manganese-based material is introduced, and the sodium-manganese-based material and the manganese-based substrate material cooperatively form the solid solution. Spinel phases are prevented from being formed in the manganese-based material; stability of the layered structure is improved; and cycling stability, especially at high temperatures, of the positive-electrode material is improved. In addition, the sodium-manganese-based material has high conductivity, conductivity of the positive-electrode material is improved, and the capacity of the positive-electrode material is improved. The button battery is arranged with the manganese-based solid solution positive-electrode material of the present disclosure, the a in the chemical formula is limited to 0.05 ≤ a ≤ 0.35, and the temperatures and the D50 of the materials during preparation are controlled. A capacity pergrapm of the button battery may be higher than 170 mAh/g at 0.1C charging-discharging current, in the voltage range of 2.5-4.5V, and at the room temperature. The capacity pergrapm of the button battery may be higher than 163 mAh/g at 0.1C charging-discharging current, in the voltage range of 2.5-4.4V, and at the room temperature. The capacity pergrapm of the button battery may be higher than 140 mAh/g at 0.1C charging-discharging current, in the voltage range of 2.5-4.35V, and at the room temperature. The capacity pergrapm of the button battery may be higher than 130 mAh/g at 0.1C charging-discharging current, in the voltage range of 2.5-4.2V, and at the room temperature. When the button battery is tested under a condition of a high temperature of 45°C, a 0.1C/0.1C current, and 2.5-4.35V, a capacity retention rate of the button battery after 100 cycles is over 93%.

## Claims

1. A manganese-based solid solution positive-electrode material, wherein the manganese-based solid solution positive-electrode material has a layered structure, and a chemical formula of the manganese-based solid solution positive-electrode material is aNa₂MnₓR₁₋ₓO₃·(1-a)LiMn_{γ}M_{i-γ}O₂, where 0.05 ≤ a < 1, 0 < x ≤ 1, 0.1 ≤ y ≤ 1, and each of the R and the M in the chemical formula independently comprises any one or combination of at least two of: alkali metal elements, alkaline earth metal elements, and transition metal elements.

2. The manganese-based solid solution positive-electrode material according to claim 1, wherein in the chemical formula, 0.05 ≤ a ≤ 0.35.

3. The manganese-based solid solution positive-electrode material according to claim 1 or 2, wherein the R in the chemical formula comprises any one of combination of at least two of: Co, Fe, Zn, Cu, Na, K, Zr, Mg, Nb, W, Y, Sr, Ca, and Al.

4. The manganese-based solid solution positive-electrode material according to any one of claims 1 to 3, wherein the M in the chemical formula comprises any one of combination of at least two of: Ni, Co, Fe, Zn, Cu, Na, K, Zr, Mg, Nb, W, Y, Sr, Ca, and Al.

5. A preparation method for the manganese-based solid solution cathode material according to any one of claims 1-4, the method comprising:
mixing a sodium-manganese-based oxide material and a single-sintered manganese-based material; and sintering mixture of the sodium-manganese-based oxide material and the single-sintered manganese-based material in an oxygen-containing atmosphere to obtain the manganese-based solid solution positive-electrode material;
wherein a chemical formula of the sodium-manganese-based oxide material is Na₂MnₓR₁₋ₓO₃, where 0 < x ≤ 1, and a chemical formula of the single-sintered manganese-based material is LiMn_{γ}M_{1-γ}O₂, where 0.1 ≤ y ≤ 1; each of the R in the chemical formula of the sodium-manganese-based oxide material and the M in the chemical formula of the single-sintered manganese-based material independently comprises alkaline earth metal elements and/or transition metal elements.

6. The preparation method according to claim 5, wherein a temperature of the sintering is 400-1000°C, preferably 800-950°C.

7. The preparation method according to claim 5 or 6, wherein a D50 of the sodium-manganese-based oxide material is 100 nm-5 µm.

8. The preparation method according to any one of claims 5-7, wherein a specific surface area of the sodium-manganese-based oxide material is 10-40 m²/g.

9. The preparation method according to any one of claims 5-8, wherein a preparation method for the sodium-manganese-based oxide material comprises:
mixing a sodium source and a manganese source; spray-pyrolyzing mixture of the sodium source and the manganese source in an oxygen-containing atmosphere to obtain the sodium-manganese-based oxide material.

10. The preparation method according to claim 9, wherein the mixed raw materials further comprise an R source;
preferably, a molar concentration of the sodium source is 0.1-2 mol/L;
preferably, the sodium source comprises any one or combination of at least two of: sodium citrate, sodium oxalate, sodium acetate, sodium carbonate, sodium hydroxide, and sodium oxide;
preferably, a molar concentration of the manganese source is 0.1-2 mol/L;
preferably, the manganese source comprises any one or combination of at least two of: manganese carbonate, manganese acetate, manganese oxalate, and manganese oxide;
preferably, a temperature of the spray-pyrolyzing is 400-1000°C.

11. The preparation method according to any one of claims 5-10, wherein the D50 of the single-sintered manganese-based material is 1-3 µm.

12. The preparation method according to any one of claims 5-11, wherein a preparation method for the single-sintered manganese-based material comprises:
mixing a manganese source and a lithium source; and performing a single sintering on mixture of the manganese source and the lithium source in an oxygen-containing atmosphere to obtain the single-sintered manganese-based material.

13. The preparation method according to claim 12, wherein the mixed raw materials further comprises an M source;
preferably, a temperature of the single sintering is 400-1000°C.

14. The preparation method according to any one of claims 5-13, further comprising:
(1) mixing a sodium source of a molar concentration of 0.1-2 mol/L and a manganese source of a molar concentration of 0.1-2 mol/L to form mixed raw materials, wherein the mixed raw materials further comprise an R source; and spray-pyrolyzing the mixed raw materials in the oxygen-containing atmosphere at 400-1000°C to obtain the sodium-manganese-based oxide material having a D50 of 100 nm-5 µm and a specific surface area of 10-40 m²/g;
mixing a manganese source and a lithium source to form another mixed raw materials, wherein the another mixed raw materials further comprise a nickel source and an M source; and single sintering the another mixed raw materials in the oxygen-containing atmosphere at 400-1000°C to to obtain the single-sintered manganese-based material having a D50 of 1-3 µm;
(2) mixing the sodium-manganese-based oxide material and the single-sintered manganese-based material and sintering mixture of the sodium-manganese-based oxide material and the single-sintered manganese-based material in the oxygen-containing atmosphere at 800-950°C to obtain the manganese-based solid solution positive-electrode material;
wherein the chemical formula of the sodium-manganese-based oxide material is Na₂MnₓR₁₋ₓO₃, where 0 < x ≤ 1; the chemical formula of the single-sintered manganese-based material is LiMn_{γ}M_{1-γ}O₂, where 0.1 ≤ y ≤ 1; each of the R in the chemical formula of the sodium-manganese-based oxide material and the M in the chemical formula of the single-sintered manganese-based material independently comprises any one or any combination of at least two of: alkali metal elements, alkaline earth metal elements, and transition metal elements.

15. A lithium-ion battery, comprising the manganese-based solid solution positive-electrode material according to any one of claims 1-14.
